Europäisches Patentamt

European Patent Office

Office européen des brevets

(11) Veröffentlichungsnummer: **0 380 997**
**A1**

(12) **EUROPÄISCHE PATENTANMELDUNG**

(21) Anmeldenummer: **90101196.5**

(22) Anmeldetag: **22.01.90**

(51) Int. Cl.5: **C01B 33/32**

(30) Priorität: **31.01.89 DE 3902754**

(43) Veröffentlichungstag der Anmeldung:
**08.08.90 Patentblatt 90/32**

(84) Benannte Vertragsstaaten:
**GR**

(71) Anmelder: **Henkel Kommanditgesellschaft auf Aktien**
**Henkelstrasse 67**
**D-4000 Düsseldorf 13(DE)**

(72) Erfinder: **Novotny, Rudolf, Dr.**
**Am Rittersberg 14**
**D-4000 Düsseldorf 13(DE)**
Erfinder: **Hoff, Alfred, Dr.**
**Wacholderstrasse 18**
**D-4130 Moers-Schwafheim(DE)**
Erfinder: **Schürtz, Jost, Dr.**
**Hintenmeiswinkeler Weg 14**
**D-5650 Solingen 1(DE)**

(54) **Verfahren zur hydrothermalen Herstellung von Natriumsilikatlösungen.**

(57) Offenbart wird ein Verfahren zur hydrothermalen Herstellung von Natriumsilikatlösungen mit hohem $SiO_2$ : $Na_2O$-Molverhältnis durch Umsetzung von Quarzsand mit wäßriger Natriumhydroxid-Lösung zu einer Natriumsilikat-Lösung mit einem Molverhältnis $SiO_2$ : $Na_2O$ von weniger als 2,9 : 1 und anschließender Umsetzung der als Zwischenprodukt erhaltenen Natriumsilikat-Lösung mit einem bei Temperaturen im Bereich von über 1100 °C bis zum Schmelzpunkt getemperten Quarz.

EP 0 380 997 A1

## Verfahren zur hydrothermalen Herstellung von Natriumsilikatlösungen

Die vorliegende Erfindung betrifft ein Verfahren zur hydrothermalen Herstellung von Natriumsilikatlösungen mit hohem $SiO_2$ : $Na_2O$-Mol-verhältnis durch Umsetzung von Quarzsand mit wäßrigen Natriumhydroxidlösungen und anschließender Umsetzung dieses Zwischenproduktes mit einer weiteren kristallinen $SiO_2$-Modifikation.

Eine allgemeine Übersicht über die Herstellung von wäßrigen Natriumsilikatlösungen geben die Monographien Winnacker, Küchler, Chemische Technologie, Band 3, Anorganische Technologie II, 4. Auflage, 1983, S. 54-63 und Ullmanns Encyklopädie der technischen Chemie, Band 21, 4. Auflage, 1982, S. 409-412.

Von den unter der Bezeichnung "Wasserglas" bekannten Alkalimetallsilikaten finden für technische Zwecke am häufigsten Natriumsilikatlösungen - allgemein als Natriumwasserglas bezeichnet - Verwendung. Derartige Natronwassergläser weisen überwiegend einen Feststoffgehalt von etwa 30 bis 40 Gew.-% sowie ein Molverhältnis Siliciumdioxid zu Natriumoxid von 3,4 bis 3,5 : 1 auf. Die Herstellung von Natronwassergläsern im technischen Maßstab erfolgt im allgemeinen durch Zusammenschmelzen von Quarzsand und Soda in hierfür geeigneten Öfen bei Temperaturen im Bereich von 1 400 bis 1 500 °C unter Abspaltung von Kohlendioxid. Die beim Abkühlen erstarrende Schmelze, das Festglas, wird anschließend in einem weiteren Verfahrensschritt unter Verwendung von Druck und erhöhten Temperaturen in Wasser gelöst und die erhaltene Lösung - je nach Qualitätsanforderung - gegebenenfalls filtriert.

Dieses Hochtemperatur-Schmelzverfahren ist jedoch sowohl apparativ als auch hinsichtlich der erforderlichen Energiemengen sehr aufwendig und führt weiterhin zu nicht unerheblichen Emissionen, wie Staub, Stickoxiden und Schwefeloxiden.

Neben diesem in der Technik hauptsächlich angewandten Hochtemperatur-Schmelzverfahren sind ferner hydrothermale Verfahren zur Herstellung wäßriger Natriumsilikatlösungen bekannt, die in einer Reihe von Patentanmeldungen beschrieben werden.

Diese Verfahren gehen zum einen von amorphem Siliciumdioxid aus, im wesentlichen also von Flugstäuben und natürlich vorkommenden amorphen Siliciumdioxid-Modifikationen.

Die hierbei erhaltenen Verfahrensprodukte sind durch die üblichen Verunreinigungen der Flugstäube und der natürlichen amorphen Siliciumdioxidverbindungen, die als Eingangsstoffe eingesetzt werden, nur von geringer Qualität und können somit nur eingeschränkt für technische Produkte verwendet werden.

Die DE-AS 28 26 432 betrifft ein Verfahren zur Herstellung von Wasserglaslösungen durch Umsetzung von Flugstäuben, die bei Gewinnung von Silicium bzw. von Ferrosilicium-Legierungen anfallen, mit wäßrigen Alkalimetallhydroxidlösungen bei erhöhten Temperaturen und anschließendem Filtrieren der enthaltenen Lösungen, das dadurch gekennzeichnet ist, daß man Flugstaub mit einer 6- bis 15-gew.-%igen wäßrigen Alkalimetallhydroxidlösung bei Temperaturen von 120 °C bis 190 °C und einem Druck von 2,9 bis 18,6 bar im Autoklaven behandelt, wobei das Gewichtsverhältnis von Alkalimetallhydroxidlösung zu festem Flugstaub 2 : 1 bis 5 : 1 beträgt. Die Verfahrensprodukte weisen ein Molverhältnis $SiO_2$ : $Na_2O$ von 2,2 bis 4 : 1 auf. Die als Ausgangsstoffe eingesetzten Flugstäube weisen einen Siliciumgehalt von 89 bis 98 Gew.-% auf, der gemäß den Ausführungsbeispielen stets bei 90 Gew-% liegt; der Rest besteht aus Verunreinigungen.

Die DE-OS 26 09 831 betrifft ein Verfahren zur Aufbereitung von Siliciumdioxid enthaltenden umweltbelastenden Abfallflugstäuben aus der Siliciummetall- und Siliciumlegierungs-Herstellung zu Kieselsäuren oder Silikaten, das dadurch gekennzeichnet ist, daß die folgenden Verfahrensschritte I bis III kombiniert werden:

I Auflösen der Flugstäube in Alkalihydroxidlösungen unter Bildung von Alkalisilikatlösungen;

II Reinigung der Alkalisilikatlösungen von organischen Bestandteilen durch Behandlung mit Aktivkohle und oder Oxidationsmitteln und Abtrennung des nicht aufschließbaren Rückstandes von der Lösung;

III Umsetzung der Alkalisilikatlösungen mit anorganischen oder organischen Säuren und/oder deren Salzen zwecks weiterer Reinigung.

Die auf diese Weise erhaltenen Alkalisilikatlösungen weisen im allgemeinen ein Molverhältnis $SiO_2$ : $Na_2O$ im Bereich von 3,3 bis 5,0 : 1 auf.

Die DE-OS 26 19 604 betrifft ein Verfahren zur Herstellung von flüssigem Wasserglas aus amorphem Siliciumdioxid und Alkalihydroxid, das dadurch gekennzeichnet ist, daß Siliciumdioxidstaub in Form von Flugasche, die von den Abgasen von Ferrolegierungs-Industrien und anderen mit Siliciumöfen arbeitenden Industrien abgeschieden worden ist, Alkalihydroxid und Wasser in einem bestimmten Gewichtsverhältnis gemischt werden und daraufhin unter Umrühren auf eine Temperatur zwischen 75 und 100 °C gebracht werden, wonach die erzielte Flüssigkeit abgekühlt wird. Die als Ausgangsstoff für diese Wasserglasherstellung benutzten Siliciumdioxidstäube weisen im allgemeinen einen Siliciumdioxidgehalt von 94 bis 98 Gew.-% auf, der Rest besteht aus Verunreinigungen.

Die DE-AS 23 28 542 betrifft ein Verfahren zur Herstellung von Alkalimetallsilikaten durch Behandlung von Perlit mit einer Alkalilauge und hydrothermale Behandlung der erhaltenen Pulpe im Autoklav unter nachfolgender Filtration, das dadurch gekennzeichnet ist, daß man zur Behandlung des Perlits eine Alkalilösung mit einer Konzentration von 40 bis 140 g/l $Na_2O$ in einer Menge einsetzt, bei der das Verhältnis der Flüssigphase zur Festphase 0,7 bis 1,5 : 1 beträgt. Bei dem Perlit handelt es sich um ein im wesentlichen amorphes, glasartiges Berggestein vulkanischen Ursprungs, welches hauptsächlich aus (in Gew.-%) Siliciumdioxid 73, Aluminiumoxid 15 und sonstigen Oxiden 8 besteht.

Wie die vorstehenden Ausführungen zeigen, liefern die in der Patentliteratur beschriebenen, aus amorphem Siliciumdioxid erhaltenen Wassergläser stets nur Verfahrensprodukte mit minderen Eigenschaften, die einer weiteren Reinigung unterzogen werden müssen.

Der im folgenden beschriebene Stand der Technik betrifft Verfahren zur hydrothermalen Herstellung von Natriumsilikatlösungen aus kristallinem Siliciumdioxid, also Sand, und Natronlauge, die nach den Verfahren des Standes der Technik allerdings nur bis zu einem $SiO_2$ : $Na_2O$-Molverhältnis von weniger als 2,89 : 1 umgesetzt werden können.

Die DE-OS 30 02 857 betrifft ein Verfahren zur hydrothermalen Herstellung von Natriumsilikatlösungen mit einem Molverhältnis $SiO_2$ : $Na_2O$ von 1,03 bis 2,88 : 1 durch Umsetzung von Sand mit wäßriger Natriumhydroxidlösung unter Druck und bei erhöhten Temperaturen sowie nachfolgender Filtration, das dadurch gekennzeichnet ist, daß man die wäßrige Natriumhydroxidlösung einer Konzentration von 10 bis 50 Gew.-% mit einem Überschuß an Sand von bis zu 300 %, bezogen auf die Molverhältnisse von $SiO_2$ : $Na_2O$ im Ansatz, bei Temperaturen im Bereich von 150 bis 250 °C und den diesen Temperaturen entsprechenden Drücken von gesättigtem Wasserdampf umsetzt und den nicht umgesetzten Sandüberschuß vollständig oder teilweise als Filtermedium für die gebildete Natriumsilikatlösung verwendet. Nach den Ausführungsbeispielen dieser Offenlegungsschrift wird allerdings maximal ein $SiO_2$ : $Na_2O$-Molverhältnis von 1,68 : 1 erreicht.

Die DE-OS 34 21 158 betrifft ein Verfahren zur hydrothermalen Herstellung von Natriumsilikatlösungen mit einem Molverhälntis $SiO_2$ : $Na_2O$ von 1,96 bis 2,17 durch Umsetzung von überschüssigem Sand mit wäßriger Natriumhydroxidlösung, das dadurch gekennzeichnet ist, daß man das einen Sandüberschuß und eine mit Prozeßwärme vorgeheizte wäßrige Natiumhydroxidlösung enthaltende Reaktionsgemisch in einem rotierenden, zylindrischen, geschlossenen Druckreaktor bis zum Erreichen eines bestimmten Molverhältnisses $SiO_2$ : $Na_2O$ umsetzt und daraufhin unter Verwendung des überschüssigen Sandes und gegebenenfalls eines zusätzlichen Filterhilfsmittels filtriert. In den Ausführungsbeispielen werden wäßrige Natriumsilikatlösungen mit einem Molverhältnis $SiO_2$ : $Na_2O$ von bis zu 2,27 : 1 offenbart.

Die DE-OS 33 13 814 betrifft ein Verfahren zur Herstellung einer klaren Lösung eines Natriumsilikats, dessen Molverhältnis Siliciumdioxid : Natriumoxid höchstens gleich 2,58 : 1 ist, durch Aufschluß von kristallinem Siliciumdioxid einer mittleren Korngröße zwischen 0,1 und 2 mm, bei dem eine wäßrige Lösung von Natriumhydroxid ein Bett aus Siliciumdioxid durchläuft, das in einem senkrechten rohrförmigen Reaktor ohne mechanische Bewegung ausgebildet und von oben nach unten mit Siliciumdioxid und der wäßrigen Lösung des Natriumhydroxids gespeist wird.

Die belgische Patentschrift 649 739 betrifft ein Verfahren und ein Gerät zur Herstellung von klaren Natriumsilikat-Laugen durch Auflösung eines kieselsäurehaltigen Materials bei hoher Temperatur und unter Druck in wäßriger Ätznatronlauge, das dadurch gekennzeichnet ist, daß das Produkt von dem überschüssigen kieselsäurehaltigen Material und/oder von den unlöslichen verunreinigten Stoffen mittels Filtrierelementen getrennt wird, die in der Nähe des Reaktorbodens angebracht sind, wobei die besagte Filtration vorteilhaft unter den Temperatur- und Druckbedingungen erfolgt, die den Reaktionsbedingungen sehr ähnlich sind. Die auf diese Weise erhaltenen wäßrigen Natriumsilikatlösungen besitzen ein Molverhältnis $SiO_2$ : $Na_2O$ von etwa 2,5 : 1.

Derartige hydrothermale Verfahren zur Herstellung von Natronwassergläsern aus Sand und Natronlauge werden auch zusammenfassend in den bereits vorstehend zitierten Monographien von Winnacker, Küchler und Ullmann erörtert. Bei Winnacker, Küchler heißt es hierzu (Seiten 61 und 62), daß sich jedoch im Hydrothermalverfahren bei den üblicherweise angewendeten Temperaturen nur ein Natriumwasserglas mit einem Verhältnis $SiO_2/Na_2O$ von kleiner als 2,7 : 1 erzielen läßt. Ullmann erwähnt in diesem Zusammenhang, daß sich auf diese Weise nur Natriumsilikat-Lösungen mit Molverhältnissen $SiO_2/Na_2O$ bis herauf zu 2,5 : 1 gewinnen lassen (Seite 412, linke Spalte).

Aufgrund der vorstehend zitierten Literatur bestand somit ein direktes Vorurteil hinsichtlich der Gewinnung von Natriumsilikat-Lösungen mit höheren $SiO_2/Na_2O$-Molverhältnissen im Hydrothermalverfahren aus Sand, d.h. aus kristallinem $SiO_2$, und Natronlauge.

Der vorliegenden Erfindung liegt demgegenüber die Aufgabe zugrunde, ein Verfahren zur hydrothermalen Herstellung von Natriumsilikatlösungen durch Umsetzung von kristallinem Siliciumdioxid mit wäßriger Natriumhydroxid-Lösung bereitzustellen, bei welchem als kristallines Siliciumdioxid unter anderem Quarz, d.h. Sand, eingesetzt wird und wobei als Endprodukt Natriumsilikat-Lösungen mit $SiO_2/Na_2O$-Molverhältnissen von mehr als 2,9 : 1 erzielt werden.

Die erfindungsgemäße Aufgabe wird durch hydrothermale Umsetzung von Quarz, d.h. Sand, mit wäßrigen Natriumhydroxid-Lösungen und anschließender hydrothermaler Umsetzung der hierbei als Zwischenprodukt erhaltenen Natriumsilikat-Lösungen mit einem speziell getemperten Quarz erreicht.

Die vorliegende Erfindung betrifft somit ein Verfahren zur hydrothermalen Herstellung von Natriumsilikat-Lösungen mit hohen $SiO_2$ : $Na_2O$-Molverhältnissen, durch Umsetzung von Quarzsand mit wäßrigen Natriumhydroxid-Lösungen bei Temperaturen im Bereich von 150 bis 300 $^\circ$C und den diesen Temperaturen entsprechenden Drücken von gesättigtem Wasserdampf in einem Druckreaktor, das dadurch gekennzeichnet ist, daß man die hierbei erhaltenen Natriumsilikat-Lösungen, die $SiO_2$ : $Na_2O$-Molverhältnisse von weniger als 2,9 : 1 aufweisen, anschließend mit einem bei Temperaturen im Bereich von über 1100 $^\circ$C bis zum Schmelzpunkt getemperten Quarz umsetzt, wobei gleichfalls Temperaturen und Drücke in den genannten Bereichen eingehalten werden.

Das erfindungsgemäße Verfahren ist durch seine einfache Verfahrensführung technisch problemloser zu handhaben und somit kostengünstiger als die technisch aufwendigen, große Energiemengen erfordernden und die Umwelt stark belastenden Verfahren des Standes der Technik, also die Hochtemperatur-Schmelzverfahren mit anschließendem Lösungsschritt.

Gegenüber den Hydrothermalverfahren des Standes der Technik besitzt das erfindungsgemäße Verfahren den Vorteil, daß durch den Einsatz des speziell getemperten Quarzes als kristalline Siliciumdioxid-Komponente in dem nachfolgenden Verfahrensschritt auch Natriumsilikat-Lösungen mit einem $SiO_2$ : $Na_2O$-Molverhältnis von mehr als 2,9 : 1 erhalten werden, was, wie vorstehend diskutiert, nach den hydrothermalen Verfahren des Standes der Technik unter Verwendung von Quarz, d.h. Sand, bislang nicht möglich war.

Weiterhin wurde überraschend gefunden, daß aus getempertem Quarz als Siliciumdioxid-Komponente und einer Natriumsilikat-Lösung im Rahmen einer Hydrothermalsynthese unter den vorstehend angegebenen Bedingungen schon bei kurzen Reaktionszeiten die direkte Herstellung von wäßrigen Natriumsilikat-Lösungen als Endprodukt möglich ist, die ein Molverhältnis $SiO_2$ : $Na_2O$ von mehr als 2,9 : 1 aufweisen.

Schließlich ist es ein besonderer Vorteil des erfindungsgemäßen Verfahrens, daß man auf technisch einfache und sehr wirtschaftliche Art Natriumsilikat-Lösungen mit hohen Siliciumdioxid-Natriumoxid-Molverhältnissen erhält, indem man für die Durchführung der Basisreaktion, also der Umsetzung von Quarz (Sand) und wäßriger Natriumhydroxid-Lösung zunächst die preisgünstigere Siliciumdioxid-Komponente, also Sand, einsetzen kann und nur für eine "Aufkieselungsreaktion" die durch Tempern von Quarz erhaltene, kostenaufwendigere kristalline Siliciumdioxid-Komponente einsetzt. Auf diese Weise kann man aus einer Natriumsilikat-Lösung mit einem Molverhältnis $SiO_2$ : $Na_2O$ von weniger als 2,9 : 1 unter Zugabe des getemperten Quarzes als kristalline Siliciumdioxid-Komponente je nach Zusatzmenge des getemperten Quarzes Natriumsilikat-Lösungen mit einem $SiO_2$ $Na_2O$-Molverhältnis von 2,9 bis 3,6 : 1 herstellen. Vorzugsweise besitzen die so erhaltenen Natriumsilikat-Lösungen $SiO_2$ : $Na_2O$-Molverhältnisse von 3,0 bis 3,5 : 1 und besonders bevorzugt von 3,3 bis 3,5 : 1.

Die bei der hydrothermalen Umsetzung von Quarz, d.h. Sand, mit Natriumhydroxid-Lösungen zunächst als Zwischenprodukt gewonnenen Natriumsilikat-Lösungen können in an sich bekannter Weise nach einem entsprechenden, beliebigen Verfahren des Standes der Technik erhalten werden. Im Sinne der vorliegenden Erfindung ist es bevorzugt, Quarzsand mit wäßriger Natriumhydroxid-Lösung in einem Konzentrationsbereich von 10 bis 50 Gew.-%, insbesondere von 15 bis 30 Gew.-%, in einem Druckreaktor umzusetzen, wobei Temperaturen im Bereich von 150 bis 300 $^\circ$C, insbesondere im Bereich von 200 bis 250 $^\circ$C, sowie den diesen Temperaturen entsprechenden Drücken von gesättigtem Wasserdampf eingehalten werden.

Die auf diese Weise gewonnenen Natriumsilikat-Lösungen weisen $SiO_2$ : $Na_2O$-Molverhältnisse von weniger als 2,9 : 1 und im allgemeinen Feststoffkonzentrationen im Bereich von 20 bis 55 % auf. Im Sinne der Erfindung werden solche Natriumsilikat-Lösungen als Zwischenprodukt bevorzugt, die Feststoffkonzentrationen im Bereich von 25 bis 40 %, insbesondere von 30 bis 38 %, aufweisen.

Nach einer bevorzugten Ausführungsform der vorliegenden Erfindung werden die - wie vorstehend beschrieben - als Zwischenprodukt erhaltenen Natriumsilikat-Lösungen anschließend mit einem bei Temperaturen im Bereich von 1200 bis 1700 $^\circ$C unter Zusatz katalytischer Mengen an Alkali getemperten Quarz, welcher sich unter diesen Temperbedingungen im wesentlichen in Cristobalit umwandelt, im Rahmen der Hydrothermalsynthese unter den vorstehend angegebenen Bedingungen umgesetzt.

Cristobalit ist, wie Quarz, eine Kristallmodifikation des Siliciumdioxids. Dieser wird praktisch ausschließlich synthetisch durch Calcinierung von Quarz hergestellt, indem man Quarzsand bei Temperaturen von ca. 1500 $^\circ$C unter Zusatz von Katalysatoren (Alkaliverbindungen) kontinuierlich umwandelt. Bezüglich näherer Informationen zu Cristobalit wird auf Ullmanns Encyklopädie der Technischen Chemie, Band 21, 4. Auflage, 1982, Seiten 439 bis 442, verwiesen.

Im Sinne der Erfindung ist es daher besonders bevorzugt, einen bei Temperaturen im Bereich von 1300 bis 1600 °C unter Zusatz katalytischer Mengen an Alkali getemperten Quarz einzusetzen, der sich unter diesen Temperbedingungen im wesentlichen in Cristobalit umwandelt. Besonders vorteilhaft ist es ferner, ein frisch getempertes, noch warmes Cristobalit-Material für das erfindungsgemäße Verfahren zu verwenden.

Bezüglich der Mengen an getempertem Quarz, d.h. insbesondere an Cristobalit, die den als Zwischenprodukt gebildeten Natriumsilikat-Lösungen zugesetzt werden, gilt das Folgende: Generell kann die stöchiometrisch erforderliche Menge an Cristobalit, bezogen auf das erwünschte $SiO_2$ : $Na_2O$-Molverhältnis in der als Endprodukt angestrebten Natriumsilikat-Lösung, zugesetzt werden. Darüber hinaus können jedoch auch Überschüsse von bis zu 100 % an Cristobalit, wiederum bezogen auf das Soll-Verhältnis $SiO_2$ : $Na_2O$ im angestrebten Endprodukt, eingesetzt werden. Generell läßt sich die Umsetzung auch mit höheren Überschüssen als 100 % an Cristobalit durchführen; dies ist jedoch im allgemeinen technisch nicht sinnvoll. Im Sinne der Erfindung ist es besonders bevorzugt, die hydrothermale Umsztung mit einem Überschuß von 1 bis 10 % an getempertem Quarz, d.h. insbesondere Cristobalit, bezogen auf das gewünschte $SiO_2$ : $Na_2O$-Molverhältnis im Endprodukt, durchzuführen.

Nach einer weiteren bevorzugten Ausführungsform der vorliegenden Erfindung führt man die hydrothermale Herstellung der als Endprodukt angestrebten Natriumsilikat-Lösungen mit hohem $SiO_2$ : $Na_2O$-Molverhältnis in der folgenden Weise durch: Zunächst werden Quarzsand und wäßrige Natriumhydroxid-Lösung (Natronlauge) bei einem bestimmten Temperatur- und Druck-Niveau im Druckreaktor umgesetzt. Der getemperte Quarz, d.h. insbesondere der Cristobalit, welcher der hierbei als Zwischenprodukt gebildeten Natriumsilikat-Lösung zugesetzt werden soll, wird auf das gleiche Temperatur- und Druck-Niveau gebracht und so im Druckreaktor mit der darin vorliegenden Natriumsilikat-Lösung vereinigt. Anschließend wird die Hydrothermalsynthese unter den gleichen Temperatur- und Druckbedingungen bis zum Erreichen des Soll-Molverhältnisses $SiO_2$ : $Na_2O$ im Bereich von 2,9 bis 3,6 : 1 des Endproduktes weitergeführt.

Andererseits kann man nach Durchführung des ersten Verfahrensschrittes den Druckbehälter zunächst entspannen und bis zu einer praktikablen Arbeitstemperatur sich abkühlen lassen, sodann den - gegebenenfalls auch vorgewärmten - Cristobalit in den Druckbehälter einspeisen und - nach Wiederherstellung der erwünschten Temperatur-und Druckbedingungen - die Hydrothermalsynthese zu Ende führen. Demgegenüber weist die vorstehend geschilderte, bevorzugte Verfahrensführung, die im Hinblick auf die konstanten Temperatur- und Druckbedingungen bei der Hydrothermalsynthese als praktisch einstufig bezeichnet werden kann, besondere wirtschaftliche Vorteile hinsichtlich hoher Raum-/Zeit-Ausbeuten bei minimalem Energieverbrauch auf.

Zur Durchführung des erfindungsgemäßen Verfahrens können generell alle für die Hydrothermalsynthese von Natronwasserglas gebräuchlichen Reaktoren Verwendung finden. Hierzu gehören z.B. rotierende Löser, stehende Löseranordnungen, Reaktoren mit Rührwerk, Strahlschlaufenreaktoren, Rohrreaktoren und im Prinzip alle Reaktoren, die zur Umsetzung von Feststoffen mit Flüssigkeiten unter Druck geeignet sind. Derartige Reaktoren sind beispielsweise in der DE-OS 30 02 857, DE-OS 34 21 158, DE-AS 28 26 432, BE-PS 649 739, DE-OS 33 13 814 und in der DE-PS 968 034 ausführlich beschrieben.

Zur Durchführung der vorstehend geschilderten "einstufigen" Verfahrensvariante ist ein geeigneter separater Druckbehälter erforderlich, in welchem der der als Zwischenprodukt gebildeten Natriumsilikat-Lösung zuzusetzende Cristobalit auf das gewünschte Temperatur- und Druck-Niveau gebracht werden kann. Dieser separate Druckbehälter ist mit dem eigentlichen Reaktor entweder durch entsprechende, mit Absperrorganen versehene Leitungen direkt verbunden, oder er wird - beispielsweise im Falle rotierender Reaktoren - mit dem eigentlichen Reaktor über entsprechende Leitungen im Bedarfsfall in Verbindung gebracht. Die hier erforderlichen Vor- bzw. Einrichtungen sind dem Fachmann gleichfalls geläufig.

Das fertige Endprodukt - die Natriumsilikat-Lösung mit hohem $SiO_2$ : $Na_2O$-Molverhältnis - wird nach Entspannen des Druckreaktors aus diesem ausgeführt und kann gewünschtenfalls zur Reinigung noch einer Filtration unterzogen werden. Hierzu können alle Filtereinrichtungen Verwendung finden, die zur Filtration von Wasserglaslösungen dem Fachmann bekannt sind.

Die in der erfindungsgemäßen Weise hergestellten Natriumsilikat-Lösungen (Natronwasserglas-Lösungen) können für alle üblichen Verwendungszwecke eingesetzt werden, die dem Fachmann bekannt sind und in der einschlägigen Literatur beschrieben werden, beispielsweise für die Herstellung von Füllstoffen (gefällten Kieselsäuren), als Klebstoffe, als Bindemittel in Farben, Gießereihilfsstoffen, Katalysatorträgern, als Komponente in Wasch- und Reinigungsmitteln, sowie als Bestandteil für feuerfeste Materialien.

Der Anmeldungsgegenstand wird durch die nachfolgenden Beispiele näher erläutert, ohne darauf beschränkt zu sein. Für "Hydrothermalverfahren" wird dabei auch die Abkürzung "HT"-Verfahren benutzt.

Als getemperter Quarz wurde in den Ausführungsbeispielen ein durch Tempern bei 1300 bis 1600 °C und Alkalikatalyse erhaltener Cristobalit verwendet.

Als Reaktor für die Durchführung der Versuche diente ein waagerecht angeordneter zylindrischer Druckbehälter aus Stahl mit einer Nickelauskleidung mit einem Volumen von ca. 0,5 l. Der Druckbehälter drehte sich mit einer Drehzahl von ca. 60 Umdrehungen pro Minute um seine horizontale Achse. Die Beheizung erfolgte von außen über einen auf Reaktionstemperatur aufgeheizten Wärmeträger.

Natriumsilikatlösungen mit einem $SiO_2 : Na_2O$-Molverhältnis von 2,0 : 1 und 2,5 : 1 wurden aus Sand und Natronlauge hergestellt, unter Zusatz von Cristobalit in den Druckreaktor eingefüllt und bei 215 bzw. 225 °C und Reaktionszeiten zwischen 20 und 60 min zu Natriumsilikat-Lösungen mit einem $SiO_2 : Na_2O$-Molverhältnis von 3,33 bis 3,50 : 1 umgesetzt.

Einzelheiten hierzu sind den nachstehenden Beispielen 1 bis 7 zu entnehmen. Beispiel 1 betrifft die Herstellung einer Natriumsilikat-Lösung mit einem Molverhältnis $SiO_2 : Na_2O$ von 2,0 : 1; die Beispiele 2 bis 7 betreffen die Umsetzung einer solchen "Basis"-Natriumsilikat-Lösung, d.h. einer solchen mit Molverhältnissen $SiO_2 : Na_2O < 2,9 : 1$, mit Cristobalit.

In einer besonders wirtschaftlichen Form kann das Verfahren der Herstellung der Basisnatriumsilikatlösung mit einem Molverhältnis < 2,9 : 1 direkt kombiniert werden mit der Anschlußreaktion der Umsetzung dieser Natriumsilikatlösung unter Zusatz von Cristobalit zu der als Endprodukt gewünschten Natriumsilikatlösung mit einem $SiO_2 : Na_2O$-Molverhältnis von 2,9 bis 3,6 : 1. Dieser Prozeßablauf wird nachfolgend beschrieben:

Die Stoffmengen (Sand bzw. Cristobalit und Natronlauge) werden über Wägevorrichtungen erfaßt. Die Rohstoffe Sand und Natronlauge werden in den Reaktor eingefüllt, dieser dann verschlossen und in Rotation versetzt. Danach wird das Reaktionsgemisch auf eine Reaktionstemperatur von ca. 215 °C aufgeheizt und bei dieser Temperatur belassen. Nach einer Reaktionszeit von 30 min bei dieser Temperatur wird der Reaktor zum Stillstand gebracht.

Aus einem an den Reaktor angeflanschten, mit Cristobalit gefüllten Druckbehälter, der auf den gleichen Druck wie der Reaktionsbehälter gebracht wird, wird die erforderliche Menge Cristobalit in den Reaktor, der die zuvor gebildete Natriumsilikat-Lösung mit einem Molverhältnis $SiO_2 : Na_2O$ von ca. 2,5 : 1 enthält, eindosiert. Danach wird der unter Druck stehende Vorratsbehälter wieder geschlossen, entspannt und vom Reaktor abgetrennt. Die zugesetzte Cristobalitmenge entspricht dem zusätzlichen $SiO_2$-Anteil, der zum Erreichen eines Molverhältnisses $SiO_2 : Na_2O$ von 3,46 : 1 in der als Endprodukt angestrebten Natriumsilikat-Lösung erforderlich ist. Danach wird der Reaktor weitere 20 bis 60 min bei Reaktionstemperatur belassen. Die Aufarbeitung der Natron-Wasserglaslösung kann dann anschließend entweder über einen Sedimentationsbehälter zur groben Abtrennung von Feststoffen oder - bei höheren Anforderungen an die Klarheit der Lösung - über ein Filter vorgenommen werden.

Es ist jedoch grundsätzlich möglich, die unter Druck stehende flüssige Phase der Natriumsilikatlösung in einen zweiten gegebenenfalls vorgeheizten Reaktionsbehälter zu überführen, in dem die berechnete Cristobalitmenge vorgelegt wurde, und die Reaktion dort zu Ende zu führen.

In einer besonderen Ausführungsform kann der Hydrothermal-Prozeß auch bei relativ hohen Feststoffkonzentrationen im Reaktor ablaufen, da unter Reaktionsbedingungen, beispielsweise 215 °C/20 bar, die im Reaktor befindliche Natriumsilikatlösung einen für den Prozeß ausreichenden Viskositätsbereich aufweist. Nach Abschluß der Reaktion kann dann zusätzlich Wasser entweder
- unter Druck direkt in den Reaktor oder
- in die Ausblaseleitung zu einem Vorlagebehälter während des Ausblasevorganges
eingespeist werden, so daß die über die Ausblaseleitung in den Vorlagebehälter gelangte Natriumsilikatlösung in der Weise ausreichend verdünnt wird, daß in der Vorlage bei Temperaturen von ca. 100 °C die Natriumsilikatlösung vor der weiteren Aufarbeitung durch Sedimentation/Filtration eine fließfähige, ausreichend niedrigviskose Konsistenz aufweist.


Beispiel 1

Dieses Beispiel betrifft die Herstellung einer "Basis-Natriumsilikat-Lösung, die als Ausgangsstoff für die weitere Umsetzung mit Cristobalit diente.

47 g Sand und 100 g einer 30 Gew.-%igen Natronlauge wurden in den waagerecht angeordneten zylindrischen Druckbehälter eingefüllt und dieser druckfest verschlossen. Nach einer Reaktionszeit von 30 min bei 215 °C/20 bar wurde der Reaktor abgekühlt und die gebildete Natriumsilikat-Lösung analysiert: Sie wies ein $SiO_2 : Na_2O$-Molverhältnis von 2,0 : 1 auf.

Diese Natriumsilikat-Lösung wurde weiter mit Cristobalit umgesetzt, wie in Beispiel 2 beschrieben ist. Die Natriumsilikat-Lösungen, die als Ausgangsstoffe für die weiteren Umsetzungen gemäß Beispiel 3 bis 7 dienten, wurden analog Beispiel 1 bei entsprechend veränderten Ansatzverhältnissen (SiO$_2$ : Na$_2$O = 2,5 : 1) und verlängerten Reaktionszeiten (90 min) gewonnen.

Beispiel 2

Ausgehend von einer Natriumsilikatlösung mit einem SiO$_2$ : Na$_2$O-Molverhältnis von 2,0 : 1 wurde unter Zusatz von Cristobalit bei 215 °C und einer Reaktionszeit von 30 min eine Natriumsilikatlösung mit einem SiO$_2$ : Na$_2$O-Molverhältnis von 3,37 : 1 erhalten.

Beispiele 3, 4 und 5

In den Beispielen 3, 4 und 5 wurden, ausgehend von einer Natriumsilikatlösung mit einem Molverhältnis SiO$_2$ : Na$_2$O von 2,5 : 1, bei 215 °C und Reaktionszeiten von 20 min und unterschiedlichen Zugabemengen von Cristobalit (Überschuß bezogen auf ein Sollverhältnis SiO$_2$ : Na$_2$O = 3,46 : 1 im Endprodukt) von 0 % (Beispiel 3), 3 % (Beispiel 4), 5 % (Beispiel 5) Natriumsilikatlösungen mit steigendem Molverhältnis SiO$_2$ : Na$_2$O von 3,33 bis 3,43 : 1 erhalten.

Beispiele 6 und 7

Ausgehend von einer Natriumsilikatlösung mit dem Molverhältnis SiO$_2$ : Na$_2$O = 2,5 : 1 wurden unter Zusatz von Cristobalit bei Reaktions zeiten von 60 min und unterschiedlichen Reaktionstemperaturen (215 °C/225 °C) Natriumsilikatlösungen mit einem Molverhältnis von 3,46 bis 3,50 : 1 hergestellt.

Die Beispiele 3, 4 und insbesondere 5 zeigen, daß die Umsetzung von Natriumsilikatlösungen mit einem Molverhältnis SiO$_2$ : Na$_2$O < 2,9 : 1 mit der kristallinen SiO$_2$-Komponente Cristobalit schon bei kurzen Reaktionszeiten (< 30 min) und relativ niedrigen Reaktionstemperaturen zu Natriumsilikatlösungen mit Molverhältnissen SiO$_2$ : Na$_2$O zwischen 3,33 und 3,43 : 1 führt.

Die Ergebnisse der Beispiele 2 bis 7 sind nachstehend in einer Tabelle zusammengefaßt.

Tabelle

| Bsp. Nr. | Natronwasserglas Molverh. $SiO_2$:$Na_2O$ | Natronwasserglasmenge (g) | In Lösung | | Cristobalitmenge (g) | Reakt.-temp. (°C) | Reakt.-zeit (min) | Natriumsilikatlösung | | Molverhältnis in der Lösung $SiO_2$ : $Na_2O$ |
|---|---|---|---|---|---|---|---|---|---|---|
| | | | $SiO_2$ (g) | $Na_2O$ (g) | | | | $SiO_2$ (%) | $Na_2O$ (%) | |
| 2 | 2,0:1 | 122,32 | 28,3 | 14,57 | 20,70 | 215 | 30 | 33,6 | 10,3 | 3,37:1 |
| 3 | 2,5:1 | 129,42 | 35,4 | 14,57 | 13,60 | 215 | 20 | 33,2 | 10,3 | 3,33:1 |
| 4 | 2,5:1 | 129,42 | 35,4 | 14,57 | 15,10 | 215 | 20 | 33,7 | 10,3 | 3,38:1 |
| 5 | 2,5:1 | 129,42 | 35,4 | 14,57 | 16,05 | 215 | 20 | 33,8 | 10,2 | 3,43:1 |
| 6 | 2,5:1 | 129,42 | 35,4 | 14,57 | 16,05 | 215 | 60 | 34,2 | 10,2 | 3,46:1 |
| 7 | 2,5:1 | 129,42 | 35,4 | 14,57 | 16,05 | 225 | 60 | 34,5 | 10,2 | 3,50:1 |

## Ansprüche

1. Verfahren zur hydrothermalen Herstellung von Natriumsilikatlösungen mit hohen $SiO_2$ : $Na_2O$-Molverhältnissen, durch Umsetzung von Quarzsand mit wäßrigen Natriumhydroxid-Lösungen bei Temperaturen im Bereich von 150 bis 300 °C und den diesen Temperaturen entsprechenden Drücken von gesättigtem Wasserdampf in einem Druckreaktor, dadurch gekennzeichnet, daß man die hierbei erhaltenen Natriumsilikat-Lösungen, die $SiO_2$ : $Na_2O$-Molverhältnisse von weniger als 2,9 : 1 aufweisen, anschließend mit einem bei Temperaturen im Bereich von über 1100 °C bis zum Schmelzpunkt getemperten Quarz umsetzt, wobei gleichfalls Temperaturen und Drücke in den genannten Bereichen eingehalten werden.

2. Verfahren nach Anspruch 1, dadurch gekennzeichnet, daß die als Endprodukt erhaltenen Natriumsilikat-Lösungen ein $SiO_2$ : $Na_2O$-Molverhältnis von 2,9 bis 3,6 : 1, vorzugsweise 3,0 bis 3,5 : 1 und besonders bevorzugt von 3,3 bis 3,5 : 1, aufweisen.

3. Verfahren nach Anspruch 1 oder 2, dadurch gekennzeichnet, daß man die im ersten Reaktionsschritt erhaltene Natriumsilikat-Lösung mit einem bei Temperaturen im Bereich von 1200 bis 1700 °C, insbesondere im Bereich von 1300 bis 1600 °C, unter Zusatz katalytischer Mengen an Alkali getemperten Quarz, welcher sich unter diesen Temperbedingungen im wesentlichen in Cristobalit umwandelt, umsetzt.

4. Verfahren nach Anspruch 3, dadurch gekennzeichnet, daß man die im ersten Reaktionsschritt erhaltene Natriumsilikat-Lösung mit Cristobalit umsetzt.

5. Verfahren nach einem der Ansprüche 1 bis 4, dadurch gekennzeichnet, daß man die im ersten Reaktionsschritt erhaltene Natriumsilikat-Lösung mit der stöchiometrisch erforderlichen Menge an getempertem Quarz, bezogen auf das erwünschte $SiO_2$ : $Na_2O$-Molverhältnis im Endprodukt, umsetzt.

6. Verfahren nach einem der Ansprüche 1 bis 4, dadurch gekennzeichnet, daß man die im ersten Reaktionsschritt erhaltene Natriumsilikat-Lösung mit einem Überschuß von bis zu 100 % an getempertem Quarz, insbesondere einem Überschuß von 1 bis 10 % an getempertem Quarz, bezogen auf das erwünschte $SiO_2$ : $Na_2O$-Molverhältnis im Endprodukt, umsetzt.

7. Verfahren nach einem der Ansprüche 1 bis 6, dadurch gekennzeichnet, daß man die hydrothermalen Umsetzungen bei Temperaturen im Bereich von 200 bis 250 °C und den diesen Temperaturen entsprechenden Drücken von gesättigtem Wasserdampf durchführt.

8. Verfahren nach einem der Ansprüche 1 bis 7, dadurch gekennzeichnet, daß man im ersten Reaktionsschritt Quarzsand mit wäßriger Natriumhydroxid-Lösung einer Konzentration von 10 bis 50 Gew.-%, insbesondere 15 bis 30 Gew.-%, umsetzt.

9. Verfahren nach einem der Ansprüche 1 bis 8, dadurch gekennzeichnet, daß man den ersten Reaktionsschritt bei einem bestimmten Temperatur- und Druck-Niveau in einem Druckreaktor durchführt, den zuzusetzenden getemperten Quarz auf das gleiche Temperatur- und Druck-Niveau bringt, die im ersten Reaktionsschritt gebildete Natriumsilikat-Lösung mit dem getemperten Quarz bei Einhaltung des gewählten Temperatur- und Druck-Niveaus vereinigt und anschließend die hydrothermale Umsetzung bis zum Erreichen des erwünschten $SiO_2$ : $Na_2O$-Molverhältnisses im Endprodukt unter den gleichen Temperatur- und Druckbedingungen weiterführt.

Europäisches
Patentamt

**EUROPÄISCHER RECHERCHENBERICHT**

Nummer der Anmeldung

EP 90 10 1196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN Band 6, Nr. 202 (C-129)(1080), 13. Oktober 1982; & JP - A - 57 111 232 (DOUKAI KAGAKU KOGYO K.K.) 07.07.1982 --- | 1 | C 01 B 33/32 |
| A | GB-A-2 078 701 (STEIRISCHE MAGNESIT-INDUSTRIE AG) * Seite 1, Zeile 88 - Seite 2, Zeile 8 * --- | 1 | |
| A | FR-A-2 541 667 (PCUK) * Ansprüche 1-4 *; & DE - A - 33 13814 (Kat. D) --- | 1 | |
| A | FR-A-2 525 204 (PCUK) * Ansprüche 1-9 *; & DE - A - 33 13814 (Kat. D) --- | 1 | |
| A | EP-A-0 164 073 (HENKEL) * Anspruch 1 * ----- | 1 | RECHERCHIERTE SACHGEBIETE (Int. Cl.5)  C 01 B 33/00 |

Der vorliegende Recherchenbericht wurde für alle Patentansprüche erstellt

| Recherchenort | Abschlußdatum der Recherche | Prüfer |
|---|---|---|
| BERLIN | 27-03-1990 | CLEMENT J.P. |